# EUROPÄISCHE PATENTSCHRIFT

(11) **EP 1 492 221 B1**
(45) Veröffentlichungstag und Bekanntmachung des Hinweises auf die Patenterteilung: **17.08.2011**
(21) Anmeldenummer: 04013985.9
(22) Anmeldetag: 15.06.2004
(51) Int. Cl.: H02P 7/00, H02P 1/38, B66D 1/46, B66D 3/20

(54) **Antriebsanordnung, insbesondere für ein Hubwerk und/oder einen Fahrantrieb**
Drive assembly, in particular for a lifting device and/or for a vehicle propulsion
Dispositif d'entrainement notamment pour un dispositif de levage et/ou un dispositif de propulsion

(30) Priorität: 27.06.2003 DE 10329157
(43) Veröffentlichungstag der Anmeldung: 29.12.2004
(73) Patentinhaber: Demag Cranes & Components GmbH, 58300 Wetter (DE)
(72) Erfinder: Freitag, Holger, 44894 Bochum (DE); Münzebrock, Anton, 44139 Dortmund (DE); Hasenack, Burkhard, 58099 Hagen (DE); Persico, Giuliano, 58300 Wetter (DE); Appel, Erik, 58300 Wetter (DE)
(74) Vertreter: Moser & Götze

(56) Entgegenhaltungen:
- EP-A1- 1 492 221
- DE-A1- 1 563 534
- DE-A1- 4 237 861
- DE-C- 740 259
- GB-A- 2 023 879
- GB-A- 2 110 488
- US-A- 5 041 775
- PATENT ABSTRACTS OF JAPAN Bd. 0051, Nr. 45 (E-074), 12. September 1981 (1981-09-12) & JP 56 078389 A (MATSUSHITA ELECTRIC IND CO LTD), 27. Juni 1981 (1981-06-27) & JP 56 078389 A (MATSUSHITA ELECTRIC IND CO LTD) 27. Juni 1981 (1981-06-27)
- PATENT ABSTRACTS OF JAPAN Bd. 0081, Nr. 19 (E-248), 5. Juni 1984 (1984-06-05) & JP 59 032372 A (MITSUBISHI DENKI KK), 21. Februar 1984 (1984-02-21) & JP 59 032372 A (MITSUBISHI DENKI KK) 21. Februar 1984 (1984-02-21)

## Beschreibung

Die Erfindung betrifft eine Antriebsanordnung eines Hubwerks und/oder eines Fahrantriebs, mit einem polumschaltbaren Drehstrommotor mit Wicklungen für mindestens zwei voneinander verschiedene Antriebsgeschwindigkeiten, mit einem den Drehstrommotor mit einer Spannungsversorgung verbindenden Polumschaltelement zum Wechsel zwischen den Antriebsgeschwindigkeiten des Drehstrommotors.

Im Stand der Technik ist es allgemein bekannt, für die horizontale oder vertikale Bewegung von Lasten beispielsweise in Fahr- oder Hubantrieben elektrische polumschaltbare Drehstromasynchronmotoren einzusetzen, deren Bewegungsrichtung reversierbar ist, in dem zwei der Drehstromphasen mit einer Wendeschaltung getauscht werden. Zusätzlich können diese Drehstromasynchronmotoren mehrere Wicklungen aufweisen, die unterschiedliche Polpaarzahlen haben. Somit besteht die Möglichkeit, die Drehzahl des Motors durch eine sogenannte Polumschaltung zwischen den Motorwicklungen mit den unterschiedlichen Polpaarzahlen zu wechseln. Das Drehzahlverhältnis ist dann durch das Polzahlverhältnis der Motorwicklungen festgelegt. Eine übliche Lösung für eine Pol- und Wendeschaltung sieht Schaltkontakte vor, die manuell oder mit einem elektromagnetischen Antrieb betätigt werden. Die letzteren werden auch als Schütze bezeichnet. Dabei wird sowohl bei der Wendung als auch bei der Polumschaltung der durch die Leistungsaufnahme des Motors bedingte Strom geschaltet. Alle Kontakte der Schütze schalten bei einer Änderung der Drehrichtung und/oder Drehzahl den vollen Motorstrom. Die Stromunterbrechung bei induktiven Lasten, die hier durch die Motorwicklungen gebildet sind, führt zu einer Funkenbildung an den Kontakten. Der Schaltabstand der Kontakte muss so gewählt werden, dass eine rasche Funkenlöschung stattfindet und der Kontakt selbst die dabei auftretenden hohen Temperaturen ohne Schäden verkraftet. Damit müssen alle Steuerungsschütze für diese Betriebsart ausgelegt werden. Wendeschütz und Polumschaltschütz sind entsprechend der oben erläuterten Betriebsart dimensioniert worden.

Bekannte Lösungen, wie beispielsweise in der deutschen Offenlegungsschrift DE 39 07 853 A1 beschrieben, haben für die Wendung zwei Schütze mit mindestens 6 Leistungskontakten und für die Polumschaltung mindestens ein weiteres Schütz mit mindestens 4 Leistungskontakten. Der Platzbedarf und die Kosten für die Schütze steigen überproportional mit der zu schaltenden Leistung. Anstatt der Steuerungsschütze können auch elektronische Halbleiterschalter zum Einsatz kommen, die jedoch wieder kostenintensiver sind.

Aus der deutschen Offenlegungsschrift DE 40 26 376 A1 ist bereits eine Schalterkombination von einem Ein-/Ausschalter mit einem Wendeschalter in einem gemeinsamen Schaltergehäuse bekannt, in dem der Wendeschalter für die Ansteuerung eines Elektromotors gegenüber dem Ein-/Ausschalter verriegelt ist. Diese Verriegelung hat die Aufgabe, zu verhindern, dass der Wendeschalter für den Drehrichtungswechsel des Elektromotors betätigt werden kann, wenn der Ein-/Ausschalter noch in seiner Ein-Stellung ist und somit der Elektromotor noch mit Energie versorgt wird. Der Wendeschalter kann somit nur stromlos geschaltet werden, wodurch eine Beschädigung oder Zerstörung der Schaltontakte des Wendeschalters vermieden werden soll. Diese Schalterkombination wird beispielsweise für die Schaltung eines Elektromotors in einer Werkzeugmaschine eingesetzt.

Diese mechanische Lösung bringt naturgemäß mit sich, dass die Schaltzeiten der Schalterkombination begrenzt sind und somit deren Einsatzgebiet.

Aus der US 5,041,775 ist ein Klimagerät bekannt, dessen Gebläse mit einem umschaltbaren Wechselstrommotor versehen ist, dessen Antriebsgeschwindigkeit zwischen zwei Geschwindigkeiten mittels eines Umschaltelements veränderbar ist. Dem Umschaltelement ist ein Leistungsschalter vorgeschaltet, über den der Gebläsemotor während der Geschwindigkeitsveränderung stromlos schaltbar ist. Des Weiteren ist aus der deutschen Offenlegungsschrift DE 15 63 534 A1 bereits eine Anordnung für eine Registerregelung innerhalb einer Druckmaschine bekannt. Um bei einem gemessenen größeren Registerfehler eine höhere Verstellgeschwindigkeit zu erreichen, wird von der Registerregelung ein polumschaltbarer Drehstrommotor angesteuert, der zwischen einer niedrigeren und einer höheren Antriebsgeschwindigkeit umschaltbar ist. Zum Wechsel zwischen den Antriebsgeschwindigkeiten ist ein Schütz vorgesehen. Auch kann über eine Vertauschung beziehungsweise Wendung der Phasen des Drehstrommotors dessen Drehrichtung geändert werden. Hierfür sind zwei weitere Schütze vorgesehen.

Die weitere deutsche Offenlegungsschrift DE 42 37 861 A1 offenbart bereits eine Schaltung für einen Antriebsmotor von Materialzerkleinerungs- oder Pressanlagen. Der Elektromotor ist als drehrichtungsumsteuerbarer Drehstrommotor ausgebildet. Für die Drehumrichtung sind Wendeschaltelemente vorgesehen. Für den Wendeschaltvorgang sind die Wendeschaltelemente über Hauptschaltmittel von der Stromversorgung trennbar, um den Schaltvorgang der Wendeschaltelemente stromlos durchführen zu können.

Der vorliegenden Erfindung liegt die Aufgabe zu Grunde, eine Antriebsanordnung eines Hubwerks und/oder eines Fahrantriebs, mit einem polumschaltbaren Drehstrommotor zu schaffen, deren Schaltverhalten in Bezug auf die Ansteuerung des Drehstrommotors optimiert ist.

Erfindungsgemäß wird eine Antriebsanordnung eines Hubwerks und/oder eines Fahrantriebs, mit einem polumschaltbaren Drehstrommotor mit Wicklungen für mindestens zwei voneinander verschiedene Antriebsgeschwindigkeiten, mit einem den Drehstrommotor mit einer Spannungsversorgung verbindenden Polumschaltelement zum Wechsel zwischen den Antriebsgeschwindigkeiten des Drehstrommotors, wobei dem Polumschaltelement ein Leistungsschaltelement vorgeschaltet ist und für den Polumschaltvorgang der Drehstrommotor über das Leistungsschaltelement von der Spannungsversorgung trennbar ist, wobei dem Polumschaltelement ein Wendeschaltelement vorgeschaltet, über das die Drehrichtung des Drehstrommotors wechselbar ist und dieses Wendeschaltelement für den Wendeschaltvorgang über das Leistungsschaltelement von der Spannungsversorgung trennbar ist und wobei die Umschaltzeiten des Polumschaltelements beziehungsweise des Polumschaltelements und des Wendeschaltelements kleiner als 200 ms, vorzugsweise kleiner als 50ms, sind, so dass das Polumschaltelementund das Wendeschaltelement stromlos geschaltet werden können. Da die Lebensdauer der Kontakte für das Schalten des Motorstroms von der Größe des geschalteten Stromes abhängt, wird hierdurch die Standzeit der Schaltkontakte verlängert. Da erfindungsgemäß stromlos geschaltet wird, können die Schaltelemente für die Polumschaltung und Wendung entsprechend kleiner dimensioniert werden. Es wird nur noch ein geringes Schaltvermögen benötigt, dass heißt geringe zu überwindende Kontaktkräfte und geringe Kontaktabstände. Die Schaltkontakte werden auch kostengünstiger. Da die Umschaltzeiten so gering sind, kann die erfindungsgemäße Antriebssteuerung auch für die Ansteuerung von polumschaltbaren Drehstrommotoren in Hubwerken oder in Fahrantrieben verwendet werden, ohne dass in der stromlosen Schaltzeit das Feld des Elektromotors zusammenbricht und beispielsweise eine Last durchrutschen würde.

Ein Kerngedanke der vorliegenden Erfindung ist, die Trennung von Lastschaltfunktion und Kontaktlogik für Richtung und Geschwindigkeit bei polumschaltbaren Drehstromasynchronmotoren.

Besonders vorteilhaft ist, dass das Leistungsschaltelement und das Polumschaltelement beziehungsweise das Polumschaltelement und das Wendeschaltelement mit einer Steuerlogik verbunden sind und über die Steuerlogik eine sequentielle Ansteuerung des Leistungsschaltelements, des Polumschaltelements beziehungsweise des Polumschaltelements und des Wendeschaltelements in der Weise erfolgt, dass das Polumschaltelement beziehungsweise das Polumschaltelement und das Wendeschaltelement vor jedem Schaltvorgang über das entsprechend angesteuerte Leistungsschaltelement von der Spannungsversorgung getrennt werden und nach dem erfolgten Schaltvorgang wieder über das Leistungsschaltelement mit der Spannungsversorgung verbunden werden. Hierdurch kann einfach eine sequentielle Steuerung des Leistungsschaltelements, des Polumschaltelements und des Wendeschaltelements erfolgen.

In konstruktiv einfacher Ausgestaltung weist das Leistungsschaltelement drei Leistungsschaltkontakte auf, von denen zwei mit Wendeschaltkontakten des zweipoligen Wendeschaltelementes verbunden sind. Ein weiterer Leistungsschaltkontakt ist direkt mit einer der Wicklungen verbunden und die Wendeschaltkontakte sind ausgangsseitig jeweils mit einem der beiden Polumschaltkontakte des zweipoligen Polumschaltelementes verbunden.

In einer weiteren Ausführungsform ist vorgesehen, dass über die Steuerlogik eine Ansteuerung des Leistungsschaltelements und/oder und des Wendeschaltelements in der Weise erfolgt, dass deren Schaltvorgänge mit der Drehzahl des Drehstrommotors synchronisiert werden. Entsprechend werden die durch den Bediener bewirkten Schaltvorgänge erst ausgelöst, wenn die Motorzustände "STILLSTAND", "LANGSAMLAUF" oder "SCHNELLLAUF" erreicht sind.

Dies ermöglicht eine ruckfreie Umschaltung zwischen verschiedenen Geschwindigkeiten. Beim Beschleunigen des Motors aus dem Stillstand wird dies mit einem geringen Anlaufstrom des Motors erreicht. Hierzu wird zunächst die hochpolige Wicklung geschaltet und bei Erreichen der gewünschten Nenndrehzahl auf die niederpolige Wicklung für hohe Geschwindigkeiten umgeschaltet. Umgekehrt wird zur Verzögerung des Motors aus einer schnellen Geschwindigkeit ein ruckfreies Verlangsamen durch Schalten der hochpoligen Wicklung bei Erreichen der Synchrondrehzahl erreicht. So kann ein Richtungswechsel durch Verzögern bis zum Stillstand und Beschleunigen bzw. Wiederanlaufen in Gegenrichtung bewirkt werden.

Daneben es ist so möglich, den optimalen Schaltzeitpunkt auch bei wechselnden Lasten und für beide Drehrichtungen zu steuern. Die Beschleunigung bzw. deren Zeit bis zum Erreichen der gewünschten Nenndrehzahl ist abhängig von der Last und der Drehrichtung. So treten bei schweren Lasten im Heben längere Beschleunigungszeiten und bei schweren Lasten im Senken kürzere Beschleunigungszeiten auf. Diese Effekte lassen sich durch die Synchronisation vermeiden bzw. kompensieren.

In einer Ausgestaltung kann eine Bremse, insbesondere elektromechanische Bremse, vorgesehen sein, deren Ansteuerung beim Abbremsvorgang in Abhängigkeit von der Drehzahl des Drehstrommotors erfolgt. Auch beim Abbremsen kann der Schaltvorgang mit der Drehzahl des Drehstrommotors synchronisiert werden. Die Synchronisierung wird vorteilhafter Weise durch den Drehstrommotor und dessen Ansteuerung mittels der Steuerlogik ausgebildet. So ist es möglich, dass ein generatorischer Bremsvorgang oder Bremsvorgangs mit Gegenstrom bei der richtigen Drehzahl abgeschaltet wird. Zusätzlich kann eine mechanische Bremse, insbesondere auf der Motorwelle, vorgesehen sein. Um den Verschleiß der mechanischen Bremse gering zu halten und so eine lange Standzeit zu erreichen, kann zunächst aus dem Zustand "SCHNELLLAUF" mittels des Generatorbetriebs des Drehstrommotors oder der Einspeisung von Gegenstrom auf den Zustand "LANGSAMLAUF" gebremst werden. Um eine ununterbrochene Verzögerung bzw. Abbremsung bei Generatorbetrieb bis zum "STILLSTAND" zu erhalten, wird dann die hochpolige Wicklung abgeschaltet und die mechanische Bremse betätigt. Bei Abbremsung mittels Gegenstrom kann auch elektrisch bis zum Stillstand verzögert bzw. gebremst werden, wobei dann das Leistungsschaltelement im Stillstand abgeschaltet werden muss, um ein Wiederanlaufen in Gegenrichtung zu verhindern.

Vorteilhaft ist es, wenn das Leistungsschaltelement drei Leistungsschaltkontakte und einen Hilfskontakt aufweist, von denen zwei mit Wendeschaltkontakten des zweipoligen Wendeschaltelementes verbunden sind und ein weiterer direkt mit einer der Wicklungen und die Wendeschaltkontakte ausgangsseitig jeweils mit einem der beiden Polumschaltkontakte des zweipoligen Polumschaltelementes verbunden sind und der Hilfskontakt mit der mechanischen Bremse verbunden ist.

Die Zeit zwischen dem Abschalten und Wiedereinschalten des Leistungsschaltelements wird auch bei diesen Ausführungsformen je nach Art des Schaltzyklus eingestellt. Für eine Polumschaltung ist beispielsweise eine Zeit zwischen 50 ms und 100 ms besonders geeignet. Für eine Phasenumschaltung (Wendung) ist eine Zeitdauer von größer 150 ms geeignet. Die unterschiedliche Wahl der Zeiten dient dazu, eine Auslösung der mechanischen Bremse zu verhindern. Daneben kann ein Kurzschluss bei der Phasenumschaltung durch den Schaltlichtbogen verhindert werden.

Vorzugsweise ist ein Impulsgeber vorgesehen, der die Steuerlogik zur Ansteuerung des Leistungsschaltelements und/oder und des Wendeschaltelements zur Synchronisierung deren Schaltvorgänge mit der Drehzahl des Drehstrommotors mit einem Drehzahlsignal versorgt.

Weitere Merkmale, Vorteile und Einzelheiten der Erfindung ergeben sich aus der nachfolgenden Beschreibung der Zeichnung. Es zeigen:
- Fig. 1: eine Ausführungsform einer Antriebsschaltung für einen polumschaltbaren Drehstrommotor und
- Fig. 2: eine weitere Ausführungsform einer Antriebsschaltung für einen polumschaltbaren Drehstrommotor mit einer mechanischen Bremse.

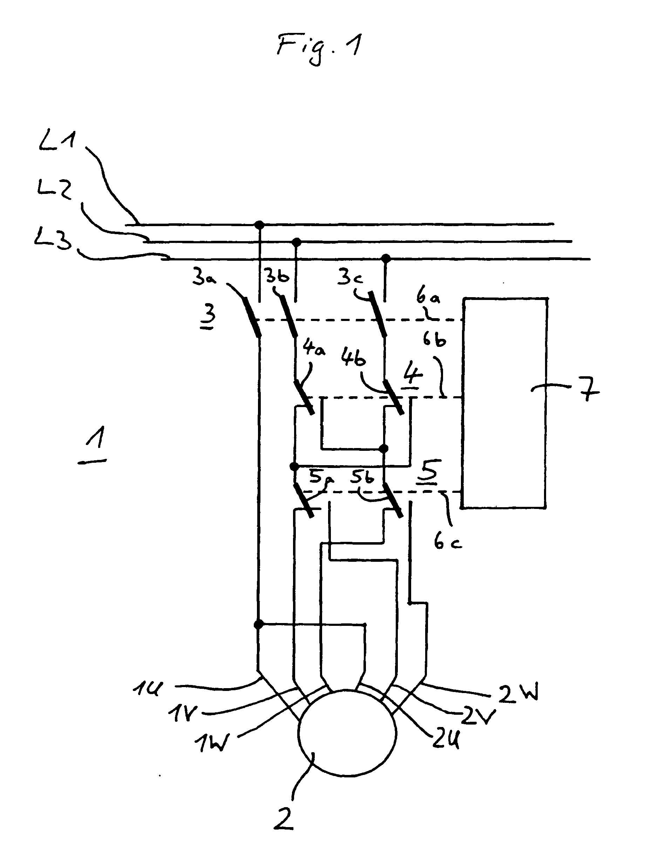

Die Erfindung wird nachfolgend an Hand eines in der Figur 1 dargestellten ersten Ausführungsbeispiels näher erläutert. Die Figur 1 zeigt eine Antriebsschaltung 1 für einen polumschaltbaren Drehstrommotor 2, insbesondere einen Drehstromasynchronmotor. Der Drehstrommotor 2 weist zwei Dreiphasen-Wicklungen mit unterschiedlichen Polpaarzahlen auf, die mit den Kennbuchstaben 1 U, 1V, 1W, 2U, 2V und 2 W bezeichnet sind.

Die Antriebsschaltung 1 und somit auch der Drehstrommotor 2 wird über eine Drehstromversorgung, von der die Stränge L1, L2 und L3 dargestellt sind, mit Energie versorgt. Die Antriebsschaltung 1 besteht hierbei im Wesentlichen - von den Strängen L1, L2 und L3 in Richtung des Drehstrommotors 2 gesehen - aus einem Lastschaltelement 3, dem ein Wendeschaltelement 4 und ein Polumschaltelement 5 nachgeschaltet sind.

Das Lastschaltelement 3 ist als herkömmliches Leistungsschütz mit drei Leistungsschaltkontakten 3a, 3b und 3c ausgestattet, die in entsprechender Weise eingangsseitig den drei Strängen L1, L2 und L3 der Energieversorgung zugeordnet sind. Über diese drei mechanisch miteinander verbundenen Leistungsschaltkontakte 3a, 3b und 3c kann der Drehstrommotor 2 mit einem Schaltvorgang allpolig von den Strängen L1, L2 und L3 getrennt werden.

Ausgangsseitig ist der dem Strang L1 zugeordnete erste Leistungsschaltkontakt 3a direkt mit der Wicklung 1 U des Drehstrommotors 2 verbunden. Der dem Strang L2 zugeordnete zweite Leistungsschaltkontakt 3b ist ausgangseitig über eine entsprechende Leitung mit einem ersten Wendeschaltkontakt 4a des zweipoligen Wendeschaltelements 4 verbunden und der dem Strang L3 zugeordnete dritte Leistungsschaltkontakt 3b mit einem zweiten Wendeschaltkontakt 4b des Wendeschaltelements 4. Die beiden Leistungsschaltkontakte 3a und 3b sind jeweils gemeinsam aus einer ersten Schaltstellung "RECHTSLAUF" in eine zweite Schaltstellung "LINKSLAUF" bewegbar. In der ersten Schaltstellung "RECHTSLAUF" ist der erste Wendeschaltkontakt 4a ausgangsseitig mit der Eingangsseite eines ersten Polumschaltschaltkontaktes 5a verbunden und der zweite Wendeschaltkontakt 4b ausgangsseitig mit der Eingangsseite eines zweiten Polumschaltschaltkontaktes 5b des zweipoligen Polumschaltelements 5. Bei der Schaltstellung "LINKSLAUF" werden die beiden Stränge L2 und L3 gegeneinander vertauscht, so dass der erste Wendeschaltkontakt 4a ausgangsseitig mit der Eingangsseite des zweiten Polumschaltschaltkontaktes 5b und der zweite Wendeschaltkontakt 4b ausgangsseitig mit der Eingangsseite des ersten Polumschaltschaltkontaktes 5a verbunden ist.

Das Polumschaltelement 5 ist ausgangsseitig mit seinen Polumschaltschaltkontakten 5a und 5b je nach Stellung der Polumschaltschaltkontakte 5a und 5b mit den Wicklungen 1V, 1W, 2V und 2W elektrisch verbunden. In der Schaltstellung "LANGSAMLAUF" ist der erste Polumschaltschaltkontakt 5a mit der Wicklung 1V und der zweite Polumschaltschaltkontakt 5b mit der Wicklung 1W verbunden. Bei der anderen Schaltstellung "SCHNELLLAUF" ist der erste Polumschaltschaltkontakt 5a mit der Wicklung 2V und der zweite Polumschaltschaltkontakt 5b mit der Wicklung 2W verbunden.

Dadurch dass über das Lastschaltelement 3 der Drehstrommotor 2 allpolig von den Strängen L1, L2 und L3 der Drehstromversorgung trennbar ist, ist es möglich, das Wendeschaltelement 4 mit seinen beiden Wendeschaltkontakten 4a und 4b sowie das Polumschaltelement 5 mit seinen beiden Polumschaltkontakten 5a und 5b im stromlosen Zustand zu schalten. Hierdurch unterliegen die beiden Wendeschaltkontakte 4a und 4b des Wendeschaltelements 4 und die beiden Polumschaltkontakte 5a und 5b des Polumschaltelements 5 praktisch keinem elektrischen Kontaktverschleiß und brauchen nicht in einer Baugröße ausgelegt zu werden, die eine Schaltung unter Last ermöglicht. Hierdurch wird auch die Baugröße entsprechend vermindert und es können Kleinschütze, Relais oder Halbleiterventile eingesetzt werden.

Das Lastschaltelement 3, das Wendeschaltelement 4 und das Polumschaltelement 5 sind über Ansteuerleitungen 6a, 6b und 6c mit einer Schaltlogik 7 verbunden. Die Schaltlogik 7 ist eingangsseitig mit nicht dargestellten Schaltern verbunden, die mit den Steuerungsfunktionen "STILLSTAND", "RECHTSLAUF", "LINKSLAUF", "SCHNELLLAUF" und "LANGSAMLAUF" belegt sind. Wird einer der Schalter betätigt, bewirkt die Schaltlogik 7 zunächst, dass der Drehstrommotor 2 über das Lastschaltelement 3 von den Strängen L1, L2 und L3 getrennt wird, dann wird die dem betätigten Schalter zugeordnete Steuerungsfunktion durch entsprechendes Schalten des Wendeschaltelements 4 und/oder des Polumschaltelements 5 ausgeführt. Anschließend wird das Lastschaltelement 3 wieder betätigt und somit der Drehstrommotor 2 in der gewünschten Betriebsweise wieder mit Strom von den Strängen L1, L2 und L3 über das Lastschaltelement 3, das Wendeschaltelement 4 und/oder das Polumschaltelement 5 versorgt. Das Wendeschaltelement 4 und/oder das Polumschaltelement 5 werden somit erfindungsgemäß ausschließlich stromlos geschaltet. Die Schaltlogik 7 hat somit im Wesentlichen die Funktion einer Ablaufsteuerung für die zeitliche Abfolge der Schaltvorgänge zur Ausführung der Steuerungsfunktionen und ermöglicht ein Erreichen kurzer Umschaltzeiten. Die Umschaltzeiten liegen bei einem Einsatz des Drehstrommotors 2 in einem Hubwerk kleiner 50 ms. Somit wird sicher ein Absacken der Last vermieden. Bei einem Einsatz des Drehstrommotors 2 in einem Fahrantrieb sind die Umschaltzeiten kleiner als 200 ms.

Außerdem ist in bevorzugter Ausführungsform in der Schaltlogik 7 vorgesehen, dass die Betätigung des Leistungsschaltelementes 3 mit der Frequenz der Drehstromversorgung oder der Drehzahl des Drehstrommotors 2 synchronisiert ist. Hiervon ausgehend kann dann der Ein- beziehungsweise Ausschaltzeitpunkt des Leistungsschaltelementes 3 optimal gewählt werden und vorteilhafter Weise wird hierdurch ein geringerer Verschleiß der Kontakte und der mechanischen Antriebskomponenten erreicht. Durch die Ablaufsteuerung innerhalb der Schaltlogik 7 können auch die Zeitpunkte für das Lüften beziehungsweise Einfallen einer Bremse unabhängig von einander optimal gesteuert werden. Auch können mit Hilfe der Schaltlogik 7 unerwünschte Befehlsfolgen durch einen Bediener verhindert werden.

Vorzugsweise ist die Schaltlogik 7 als programmierbares IC ausgebildet (beispielsweise ASIC, Mikroprozessor, PGA). Die bereits für die erfindungsgemäße Antriebsschaltung vorhandene Schaltlogik 7 kann auch für die Realisierung weitere Funktionen wie beispielsweise elektrisches Bremsen über die hochpolige Wicklung, Anlauf über die hochpolige Wicklung, "Tipp-Verhinderung" und/oder Drehzahlerfassung eingesetzt werden.

Unter "Tippen" wird ein vom Bediener erzeugtes schnelles wiederholtes Betätigen des Steuerschaltertasters "RECHTSLAUF" bzw. "LINKSLAUF" verstanden. Die Hochlaufzeit von am Netz geschalteten Drehstrommotoren liegt im Bereich < 1s. Durch ein schnelles Tippen mit Wiederholzeiten < 1s, wird der Motoranlaufstrom wiederholt ein- und ausgeschaltet. Bekanntlich ist der Anlaufstrom von am Netz geschalteten Drehstrommotoren ein Vielfaches des Nennstroms (typischer Faktor: 6-7). Die Schaltkontakte schalten beim Tippen wiederholt den Anlaufstrom ein und aus; dies führt zum vorzeitigen Verschleiß der Schaltkontakten. Die "Tipp-Verhinderung" unterbindet ein Tippen mit Wiederholzeiten unterhalb der Hochlaufzeit des Motors. Tastenbestätigungen innerhalb der Hochlaufzeit werden von der Folgelogik ignoriert, so dass ein wiederholtes Schalten des Anlaufstromes nicht möglich ist.

Für Einsatzfälle, bei denen Störungen durch Schaltlichtbogen des 3-poligen Leistungsschaltelements 3 vermieden werden müssen, kann mit geringem Aufwand dieses durch einen Halbleiterschalter ersetzt werden. Hierdurch wird auch die Lebensdauer der erfindungsgemäßen Antriebsschaltung um ein Mehrfaches verlängert.

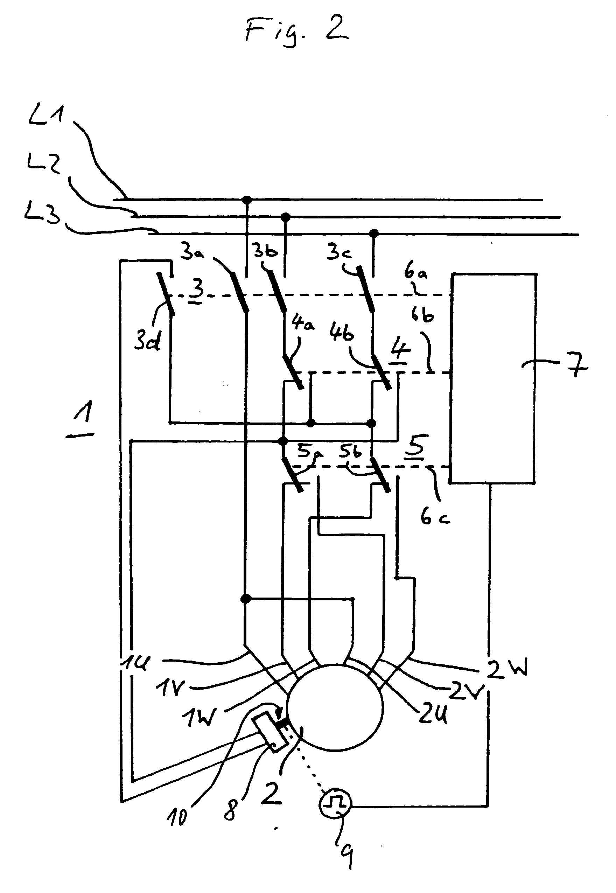

Die Ausführungsform nach Fig. 2 unterscheidet sich von der vorhergehend beschriebenen Ausführungsform im Wesentlichen durch das Vorhandensein einer mechanischen Bremse 8, eines Impulsgebers 9 sowie deren geeigneten Verschaltung, so dass dieselben Bezugszeichen wie in Fig. 1 Verwendung finden.

Die Bremse 8 ist auf der Welle 10 des Drehstrommotors 2 angeordnet. Bei dem Impulsgeber 9 handelt es sich um eine dem Fachmann geläufige Vorrichtung zur Bestimmung der Drehzahl des Motors 2. Diese ist ebenfalls an der Welle 10 des Motors angeordnet und versorgt die Schaltlogik 7 mit Impulsen zur Bestimmung der Drehzahl des Motors 2 (vgl. oben).

Das Lastschaltelement 3 ist auch in dieser Ausführungsform als herkömmliches Leistungsschütz mit drei Leistungsschaltkontakten 3a, 3b und 3c ausgestattet, die in entsprechender Weise eingangsseitig den drei Strängen L1, L2 und L3 der Energieversorgung zugeordnet sind. Über die drei mechanisch miteinander verbundenen Leistungsschaltkontakte 3a, 3b und 3c kann der Drehstrommotor 2 mit einem Schaltvorgang allpolig von den Strängen L1, L2 und L3 getrennt werden. Zusätzlich ist ein Hilfskontakt 3d vorhanden, der mit der Bremse 8 verschaltet ist und zu deren Ein- und Ausschalten dient.

Die mechanische Bremse 8 ist auf einer Seite über eine entsprechende Leitung direkt mit der Eingangsseite des zweiten Polumschaltschaltkontaktes 5a und auf der anderen Seite mit der der Ausgangsseite des Hilfskontakts 3d verbunden. Der Hilfskontakt 3d ist eingangsseitig mit der Eingangsseite des ersten Polumschaltschaltkontaktes 5a verbunden.

In allen Zuständen "STILLSTAND", "RECHTSLAUF", "LINKSLAUF", "SCHNELLLAUF" und "LANGSAMLAUF" lüftet die Bremse 8, sobald die Leistungskontakte 3a, 3b und 3c sowie der Hilfskontakt 3d geschaltet wurden und ein Strom durch die Bremse 8 fließt. Somit ist sichergestellt, dass der Motor 2 nicht gegen die Bremse anlaufen bzw. laufen muss. Ferner fällt die Bremse 8 z. B. federbetätigt automatisch ein, sobald der Stromfluss zum Motor 2 durch Öffnen der Leistungsschaltkontakte (und des Hilfskontakts) unterbrochen wird. Auch wird die Ansteuerung der Bremse 8 über die Schaltlogik 7 mit der Drehzahl des Drehstrommotors 2 synchronisiert.

Im Übrigen entspricht die Ausführungsform der Fig. 2 derjenigen nach Fig. 1.

## Patentansprüche

1. Antriebsanordnung eines Hubwerks und/oder eines Fahrantriebs, mit einem polumschaltbaren Drehstrommotor (2) mit Wicklungen für mindestens zwei voneinander verschiedenen Antriebsgeschwindigkeiten, mit einen dem Drehstrommotor (2) mit einer Spannungsversorgung (L1, L2, L3) verbindenden Polumschaltelement zum Wechsel zwischen den Antriebsgeschwindigkeiten des Drehstrommotors (2), wobei dem Polumschaltelement (5) ein Leistungsschaltelement (3) vorgeschaltet ist und für den Polumschaltvorgang der Drehstrommotor (2) über das Leistungsschaltelement (3) von der Spannungsversorgung (L1, L2, L3) trennbar ist, wobei dem Polumschaltelement (5) ein Wendeschaltelement (4) vorgeschaltet ist, über das die Drehrichtung des Drehstrommotors (2) wechselbar ist und das für den Wendeschaltvorgang der Drehstrommotor (2) über das Leistungsschaltelement (3) von der Spannungsversorgung trennbar Ist und die Umschaltzeiten des Polumschaltelements (5) beziehungsweise des Polumschaltelements (5) und des Wendeschaltelements (3) kleiner als 200ms, vorzugsweise kleiner als 50ms, sind.

2. Antriebsanordnung nach Anspruch 1,
**dadurch gekennzeichnet,**
**dass** das Leistungsschaltelement (3) und das Polumschaltelement (5) beziehungsweise das Polumschaltelement (5) und das Wendeschaltelement (4) mit einer Steuerlogik (7) verbunden sind und über die Steuerlogik (7) eine sequentielle Ansteuerung des Leistungsschaltelements (3), des Polumschaltelements (5) beziehungsweise des Polumschaltelements (5) und des Wendeschaltelements (3) in der Weise erfolgt, dass das Polumschaltelement (5) beziehungsweise das Polumschaltelement (5) und das Wendeschaltelement (4) vor jedem Schaltvorgang über das entsprechend angesteuerte Leistungsschaltelement (3) von der Spannungsversorgung getrennt werden und nach dem erfolgten Schaltvorgang wieder über das Leistungsschaltelement (3) mit der Spannungsversorgung verbunden werden.

3. Antriebsanordnung nach Anspruch 1 oder 2,
**dadurch gekennzeichnet,**
**dass** das Leistungsschaltelement (3) drei Leistungsschaltkontakte (3a, 3b, 3c) aufweist, von denen zwei mit Wendeschaltkontakten (4a, 4b) des zweipoligen Wendeschaltelementes (4) verbunden sind und ein weiterer direkt mit einer der Wicklungen (1U, 1V, 1W, 2U, 2V, 2W) und die Wendeschaltkontakte (4a, 4b) ausgangsseitig jeweils mit einem der beiden Polumschaltkontakte (5a, 5B) des zweipoligen Polumschaltelementes (5) verbunden sind.

4. Antriebsanordnung nach einem der Ansprüche 1 bis 3,
**dadurch gekennzeichnet,**
**dass** über die Steuerlogik (7) eine Ansteuerung des Leistungsschaltelements (3) und/oder und des Wendeschaltelements (3) in der Weise erfolgt, dass deren Schaltvorgänge mit der Drehzahl des Drehstrommotors (2) synchronisiert werden.

5. Antriebsanordnung nach Anspruch 4,
**dadurch gekennzeichnet,**
**dass** eine Bremse vorgesehen ist, deren Ansteuerung in der Weise erfolgt, dass deren Schaltvorgänge mit der Drehzahl des Drehstrommotors (2) synchronisiert werden.

6. Antriebsanordnung nach Anspruch 5,
**dadurch gekennzeichnet,**
**dass** eine elektromechanische Bremse vorgesehen ist.

7. Antriebsanordnung nach Anspruch 6,
**dadurch gekennzeichnet,**
**dass** die elektromechanische Bremse durch die Steuerlogik (7) angesteuert wird.

8. Antriebsanordnung nach einem der Ansprüche 1 bis 7,
**dadurch gekennzeichnet,**
**dass** eine mechanische Bremse (8), insbesondere auf der Motorwelle (10), vorgesehen ist.

9. Antriebsanordnung nach Anspruch 8,
**dadurch gekennzeichnet,**
**dass** das Leistungsschaltelement (3) drei Leistungsschaltkontakte (3a, 3b, 3c) und einen Hilfskontakt (3d) aufweist, von denen zwei mit Wendeschaltkontakte (4a, 4b) des zweipoligen Wendeschaltelementes (4) verbunden sind und ein weiterer direkt mit einer der Wicklungen (1U, 1V, 1W, 2U, 2V, 2W) und die Wendeschaltkontakten (4a, 4b) ausgangsseitig jeweils mit einem der beiden Polumschaltkontakte (5a, 5B) des zweipoligen Polumschaltelementes (5) verbunden sind und der Hilfskontakt (3d) mit der mechanischen Bremse (8) verbunden ist.

10. Antriebsanordnung nach Anspruch 9,
**dadurch gekennzeichnet,**
**dass** ein Impulsgeber (9) vorgesehen ist, der die Steuerlogik (7) zur Ansteuerung des Leistungsschaltelements (3) und/oder und des Wendeschaltelements (3) zur Synchronisierung deren Schaltvorgänge mit der Drehzahl des Drehstrommotors (2) mit einem Drehzahlsignal versorgt.

## Claims

1. Drive arrangement for an item of lifting equipment and/or a travel drive, having a three-phase pole-change motor (2) which has windings for at least two driving speeds which are different from one another, having a pole-changing member, for changing between the driving speeds of the three-phase motor (2), which connects the three-phase motor (2) to a voltage supply (L1, L2, L3), a power-switching member (3) being connected upstream of the pole-changing member (5) and, for the pole-changing operation, the three-phase motor (2) being able to be isolated from the voltage supply (L1, L2, L3) by means of the power-switching member (3), the pole-changing member (5) being connected upstream of it a reversing member (4), by means of which the direction of rotation of the three-phase motor (2) can be changed and, for the reversing operation, the three-phase motor (2) is able to be isolated from the voltage supply (L1, L2, L3) by means of the power-switching member (3), and the changeover times of the pole-changing member (5) or the pole-changing member (5) and the reversing member (3), as the case may be, are less than 200 ms and preferably less than 50 ms.

2. Drive arrangement according to claim 1, **characterised in that** the power-switching member (3), and the pole-changing member (5) or the pole-changing member (5) and the reversing member (4), as the case may be, are connected to controlling logic (7) and, by means of the controlling logic (7), sequential actuation of the power-switching member (3), and the pole-changing member (5) or the pole-changing member (5) and the reversing member (3), as the case may be, is performed in such a way that, before each switchover operation, the pole-changing member (5) or the pole-changing member (5) and the reversing member (4), as the case may be, is/are isolated from the voltage supply by means of the suitably actuated power-switching member (3) and, once the switchover operation has taken place, is/are re-connected to the voltage supply by means of the power-switching member (3).

3. Drive arrangement according to claim 1 or 2, **characterised in that** the power-switching member (3) has three power-switching contacts (3a, 3b, 3c) of which two are connected to reversing contacts (4a, 4b) of the two-pole reversing member (4) and a further one is connected directly to one of the windings (1U, 1V, 1W, 2U, 2V, 2W), and the reversing contacts (4a, 4b) are connected on the output side to respective ones of the two pole-changing contacts (5a, 5b) of the two-pole pole-changing member (5).

4. Drive arrangement according to one of claims 1 to 3, **characterised in that** actuation of the power-switching member (3) and/or of the reversing member (3) is performed by means of the controlling logic (7) in such a way that the operations of switching them over are synchronised with the speed of rotation of the three-phase motor (2).

5. Drive arrangement according to claim 4, **characterised in that** a brake is provided which is actuated in such a way that the operations of switching it over are synchronised with the speed of rotation of the three-phase motor (2).

6. Drive arrangement according to claim 5, **characterised in that** an electromechanical brake is provided.

7. Drive arrangement according to claim 6, **characterised in that** the electromechanical brake is actuated by means of the controlling logic (7).

8. Drive arrangement according to one of claims 1 to 7, **characterised in that** a mechanical brake (8) is provided, in particular on the shaft (10) of the motor.

9. Drive arrangement according to claim 8, **characterised in that** the power-switching member (3) has three power-switching contacts (3a, 3b, 3c) and an auxiliary contact (3d), of which two are connected to reversing contacts (4a, 4b) of the two-pole reversing member (4) and a further one is connected directly to one of the windings (1U, 1V, 1W, 2U, 2V, 2W), and the reversing contacts (4a, 4b) are connected on the output side to respective ones of the two pole-changing contacts (5a, 5b) of the two-pole pole-changing member (5) and the auxiliary contact (3d) is connected to the mechanical brake.

10. Drive arrangement according to claim 9, **characterised in that** a pulse emitter (9) is provided which supplies the controlling logic (7) with a signal for speed of rotation to allow the power-switching member (3) and/or the reversing member (3) to be actuated in such a way as to synchronise the operations of switching them over with the speed of rotation of the three-phase motor (3).

## Revendications

1. Dispositif d'entraînement d'un engin de levage et/ou d'un entraînement de propulsion, ledit dispositif d'entraînement comportant un moteur triphasé (2) à pôles commutables doté d'enroulements pour au moins deux vitesses d'entraînement différentes l'une de l'autre, un élément de commutation de pôles reliant le moteur triphasé (2) à une alimentation en tension (L1, L2 L3) et destiné à faire passer le moteur triphasé (2) d'une vitesse d'entraînement à l'autre, un élément de commutation de puissance (3) étant monté en amont de l'élément de commutation de pôles (5) qui peut être séparé de l'alimentation en tension (L1, L2, L3) au moyen de l'élément de commutation de puissance (3) en vue du processus de commutation de pôles du moteur triphasé (2), un élément inverseur de sens de marche (4) étant monté en amont de l'élément de commutation de pôles (5), lequel élément inverseur de sens de marche est apte à modifier le sens de rotation du moteur triphasé (2) et peut être séparé de l'alimentation en tension au moyen de l'élément de commutation de puissance (3) en vue du processus d'inversion du sens de marche du moteur triphasé (2), et les temps de commutation de l'élément de commutation de pôles (5), respectivement de l'élément de commutation de pôles (5) et de l'élément inverseur de sens de marche (3) étant inférieurs à 200 ms, de préférence inférieure à 50 ms.

2. Dispositif d'entraînement selon la revendication 1, **caractérisé en ce que** l'élément de commutation de puissance (3) et l'élément de commutation de pôles (5), respectivement l'élément de commutation de pôles (5) et l'élément inverseur de sens de marche (4) sont reliés à une logique de commande (7) et une commande séquentielle de l'élément de commutation de puissance (3), de l'élément de commutation de pôles (5), respectivement de l'élément de commutation de pôles (5) et de l'élément inverseur de sens de marche (3) est effectué au moyen de la logique de commande (7) de façon que l'élément de commutation de pôles (5), respectivement l'élément de commutation de pôles (5) et l'élément inverseur de sens de marche (4) sont séparés de l'alimentation en tension avant chaque processus de commutation par le même élément de commutation de puissance (3) commandé de façon correspondante et sont de nouveau reliés à l'alimentation en tension par l'élément commutation de puissance (3) après que le processus de commutation a été effectué.

3. Dispositif d'entraînement selon la revendication 1 ou 2, **caractérisé en ce que** l'élément de commutation de puissance (3) possède trois contacts de commutation de puissance (3a, 3b, 3c) dont deux sont reliés à des contacts d'inverseur de sens de marche (4a, 4b) de l'élément bipolaire inverseur de sens de marche (4) et un autre est relié directement à l'un des enroulements (1U, 1V, 1W, 2U, 2V, 2W) et les contacts d'inversion de sens de marche (4a, 4b) sont reliés chacun à l'un des deux contacts de commutation de pôles (5a, 5B) de l'élément bipolaire de commutation de pôles (5).

4. Dispositif d'entraînement selon l'une des revendications 1 à 3, **caractérisé en ce qu'**une commande de l'élément de commutation de puissance (3) et/ou de l'élément inverseur de sens de marche (3) est effectuée au moyen de la logique de commande (7) de façon que leurs processus de commutation soient synchronisés avec la vitesse de rotation du moteur triphasé (2).

5. Dispositif d'entraînement selon la revendication 4, **caractérisé en ce qu'**il est prévu un frein dont la commande est effectuée de façon que leurs processus de commutation soient synchronisés avec la vitesse de rotation du moteur triphasé (2).

6. Dispositif d'entraînement selon la revendication 5, **caractérisé en ce qu'**il est prévu un frein électromécanique.

7. Dispositif d'entraînement selon la revendication 6, **caractérisé en ce que** le frein électromécanique est commandé par la logique de commande (7).

8. Dispositif de commande selon l'une des revendications 1 à 7, **caractérisé en ce qu'**il est prévu un frein mécanique (8), notamment sur l'arbre moteur (10).

9. Dispositif d'entraînement selon la revendication 8, **caractérisé en ce que** l'élément de commutation de puissance (3) possède trois contacts de commutation de puissance (3a, 3b, 3c) et un contact auxiliaire (3d) dont deux sont reliés à des contacts d'inversion de sens de marche (4a, 4b) de l'élément bipolaire inverseur de sens de marche (4) et un autre est relié directement à l'un des enroulements (1U, 1V, 1W, 2U, 2V 2W) et les contacts d'inversion de sens de marche (4a, 4b) sont chacun reliés en sortie à l'un des deux contacts de commutation de pôles (5a, 5B) de l'élément bipolaire de commutation de pôles (5) et le contact auxiliaire (3d) est relié au frein mécanique (8).

10. Dispositif d'entraînement selon la revendication 9, **caractérisé en ce qu'**il est prévu un générateur d'impulsions (9) qui délivre à la logique de commande (7) un signal de vitesse de rotation en vue de commander l'élément de commutation de puissance (3) et/ou l'élément inverseur de sens de marche (3) afin de synchroniser leurs processus de commutation avec la vitesse de rotation du moteur à courant alternatif (2).
